Europäisches Patentamt

**European Patent Office**

Office européen des brevets

(11) Veröffentlichungsnummer : **0 062 250 B1**

(12) EUROPÄISCHE PATENTSCHRIFT

(45) Veröffentlichungstag der Patentschrift :
30.11.88

(21) Anmeldenummer : 82102520.2

(22) Anmeldetag : 25.03.82

(51) Int. Cl.⁴ : **G 01 N 27/46**

(54) **Fehlerkompensierendes elektroanalytisches Messverfahren, sowie Messgerät zur Durchführung des Messverfahrens.**

(30) Priorität : 26.03.81 HU 75881

(43) Veröffentlichungstag der Anmeldung :
13.10.82 Patentblatt 82/41

(45) Bekanntmachung des Hinweises auf die Patenterteilung : 30.11.88 Patentblatt 88/48

(84) Benannte Vertragsstaaten :
**AT CH DE FR GB LI SE**

(56) Entgegenhaltungen :
EP-A- 0 060 533
DE-A- 2 631 302
DE-A- 2 908 719
DE-C- 2 845 805

(73) Patentinhaber : **RADELKIS Elektrokémiai Müszer-gyárto Szövetkezet**
**Laborc u. 1**
**H-1300 Budapest (HU)**

(72) Erfinder : **Daròczy, János, Dipl.-Ing.**
**Vöröshadsereg utja 26**
**Budapest 1021 (HU)**
Erfinder : **Erdélyi, János, Dipl.-Ing.**
**Zalai ut 4/c**
**Budapest 1125 (HU)**
Erfinder : **Havas, Jenò, Dr. Dipl.-Ing.**
**Remetehegyi ut 32**
**Budapest 1037 (HU)**
Erfinder : **Kecskés, Lajos, Dipl.-Ing.**
**Remetehegyi ut 32**
**Budapest 1037 (HU)**
Erfinder : **Müller, Henrik, Dipl.-Ing.**
**Péterhegyi köz 54**
**Budapest 1112 (HU)**

(74) Vertreter : **Lehn, Werner, Dipl.-Ing. et al**
**Hoffmann, Eitle & Partner Patentanwälte Arabellastrasse 4**
**D-8000 München 81 (DE)**

Jouve, 18, rue St-Denis, 75001 Paris, France

**Beschreibung**

Die Erfindung betrifft ein elektroanalytisches Meßverfahren zur Bestimmung der Ionenaktivität von Probenlösungen mittels einer Meßkette, die mindestens ein Fühlelement, das mit einer Seite mit der Probenlösung in Berührung steht, und mindestens zwei Bezugselektroden aufweist, von denen die eine über eine Elektrolytlösung mit der anderen Seite des mindestens einen Fühlelements und die andere Bezugselektrode über eine Elektrolytlösung mit der Probenlösung galvanisch verbunden wird, und mittels einer elektronischen signalverarbeitenden Einheit, und ein entsprechendes Meßgerät zur Durchführung eines solchen Meßverfahrens. Ein derartiges Verfahren bzw. ein hierfür geeignetes Meßgerät ist in EP-A-60 533 (beanspruchtes Prioritätsdatum : 13.03.81, veröffentlicht am 22.09.82) beschrieben.

Es ist bekannt, daß eine elektrochemische Meßkette aus mehreren Einheiten, d. h. einem Fühlelement oder mehreren Fühlelementen und einer oder mehreren Bezugselektroden besteht. Demzufolge ist den entsprechenden Ausgängen der Meßkette ein Meßsignal entnehmbar, das als Resultierende von mehreren Strömen oder Spannungen (im allgemeinen als eine algebraische Summe) zustandekommt. Die Größe des resultierenden Meßsignales bestimmt daher nicht nur das elektrochemische Verhalten des Meßelementes, sondern sämtliche Teile der Meßkette haben auf die Meßgröße ihre Einwirkung. Daraus folgt, daß falls in einer konventionellen Meßzelle an einem beliebigen Element der Meßkette eine ungewünschte Änderung (z. B. wegen Temperatureinflüssen aus Alterungsgründen) auftritt, d. h. eine Störung zustandekommt, so kann man diese Störung aus der Änderung des zu messenden Parameters, d. h. aus der Änderung des Meßsignales unterscheiden (z. B. auf der Erhöhung oder Absenkung der Konzentration der Probe).

Dies ist der Grund, daß man bei den herkömmlichen Meßmethoden (Kalibrierung, Standardisierung, konstante Ionstärkeeinstellung, Steilheit-Programmierung) — siehe z. B. Havas : Ion- und Molekulselektive Elektroden in biologischen Systemen. Neue Ergebnisse der Chemie ; Akademischer Verlag, Budapest, 1980, Seiten 80-87 — nicht bestrebt ist die Größe der Fehlersignale zu bestimmen, die aus den erwähnten Störungen stammen. Sämtliche bisher bekannten Verfahren basieren auf einem Vergleich einer Probe mit einer oder mehreren Fluiden bekannter Zusammensetzung (Standardlösung oder Gas) über ihre entsprechenden elektrochemischen Parameter. Dies bedeutet, daß vor der Messung das elektronische Verhalten des Meßgerätes und das elektrochemische Verhalten der Meßzelle durch ein entsprechendes Betätigungsorgan immer abgestimmt sein muß. Dieser Verfahrensschritt wird allgemein als Anpassung bezeichnet.

Wegen der unkontrollierbaren Unregelmäßigkeiten der Störung hängt die Genauigkeit der Messungen scheinbar davon ab, wie häufig die Anpassungen vorgenommen werden. Bei Präzisionsmessungen — wenigstens zur Kontrolle — war es stets nötig, in irgendwelcher Form eine Anpassung durchzuführen. Wenn diejenige Zeit in Betracht gezogen wird, die zur Durchspülung der Meßzelle notwendig ist, bedeutet dies, daß die Gesamtzeit der Analyse — bei der Anwendung von zwei Standardfluiden — beinahe fünfmal so lang ist, wie diejenige Zeit, die für die effektive Messung erforderlich ist. Obwohl durch die Anwendung der in der Elektroanalyse in breitem Maße verbreiteten « Anpassung durch einen Punkt » diese Zeit ungefähr auf die Hälfte abgesenkt werden konnte, tritt jedoch der unbeseitigbare Fehler der durch die Veränderung der Antsprechfunktion-Steilheit (« slope ») der Meßzelle im Laufe der Messung hervorgerufen wurde, in Erscheinung.

Die häufige Durchführung der Anpassung war nicht nur wegen der eventuellen Schwankungen der elektrochemischen Parameter der Meßzelle notwendig. Die häufige Anpassung war auch deswegen notwendig, weil das Meßgerät wegen prinzipieller elektrotechnischer Gründe eine größere Zeitlang nicht stabil sein konnte.

Aufgrund der obigen Ausführungen ist evident, daß die Gesamtzeit der Präzisionsmessungen — wegen der Anpassungsoperationen im Verlaufe der Messung — sehr lang ist. Kontinuierliche und entsprechend genaue Messungen waren bisher unmöglich, da der Aufbau der konventionellen Meßzellen die Bestimmung der Meßfehler im Verlaufe der Messung überhaupt nicht ermöglicht hat. Demzufolge war auch eine Anpassung während der Messung unmöglich.

Aufgabe der vorliegenden Erfindung ist es, diese Nachteile zu vermeiden.

Diese Aufgabe wird erfindungsgemäß durch die Merkmale des Anspruchs 1 bzw. 3 gelöst.

Das elektroanalytische Meßverfahren gemäß der Erfindung beruht auf der Erkenntnis, daß, falls in einer Meßzelle, die für eine stufenweise oder stufenweise kontinuierliche, oder für eine kontinuierliche Messung eingerichtet ist, die das Fühlelement oder die Fühlelemente und die Bezugselektroden beinhaltende Meßkette bzw. einen Teil der Meßkette galvanisch kurzzeitig kurzgeschlossen werden. Damit kann von den im kurzgeschlossenen Zustand erhaltenen Meßsignalen auf das elektrochemische Verhalten der nicht kurzgeschlossenen Teile der Meßzelle, bzw. auf die Parameteränderungen im Verlaufe der Messung geschlossen werden, wodurch die Möglichkeit geboten wird, die aus den erwähnten Änderungen stammenden Störeffekte und damit störende Fehler zu eliminieren.

Vorteilhafte Weiterbildungen der Erfindungen werden durch die abhängigen Ansprüche gekennzeichnet.

Das Meßverfahren und das Gerät gemäß der Erfindung können durch die nachstehenden Vorteile charakterisiert werden :

Die Störeffekte, die an den keine nützlichen Informationen liefernden Elementen der Meßkette erscheinen, werden eliminiert.

Die elektrochemischen Parameter der Fühl- und Bezugselektroden können im Laufe der Messung beobachtet werden.

Das Meßergebnis wird von den Störeffekten, die im Verlaufe der Messung durch Parameteränderungen der Fühlelektroden zustandekommen, unabhängig.

Durch Anwendung der Erfindung kann die Anpassung im Verlaufe der Messung vorgenommen werden.

Die Störeffekte, die von den Strömungspotentialen stammen, werden eliminiert.

Die Anwendung der Erfindung setzt den aus dem Diffusionspotential stammenden Fehler herab.

Eine wesentliche genauere Messung kann sowohl bei der kontinuierlichen, als auch bei der schrittweisen Messung gerreicht werden.

Die Gesamtzeit der Analysen wird bedeutend abgekürzt.

Die erforderliche Häufigkeit der Ein- oder Zweipunkt-Anpassungen wird herabgesetzt.

Der schädliche elektronische Drifteffekt der Meßanlage wird beseitigt.

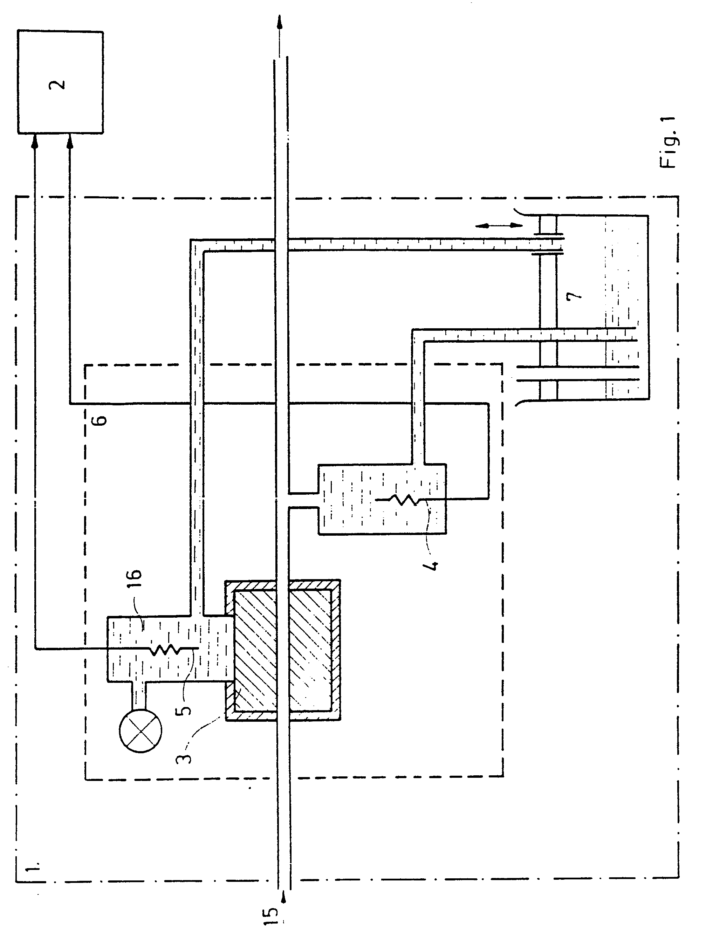

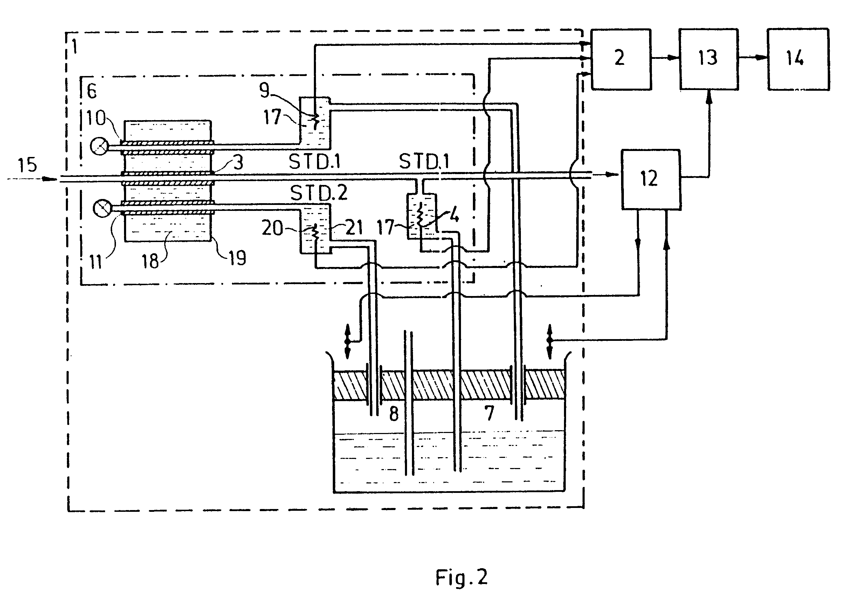

Das elektroanalytische Verfahren und das elektroanalytische Meßgerät zur Realisierung des Verfahrens gemäß der Erfindung werden nachstehend anhand von zwei Ausführungsbeispielen näher erläutert, die in den Figuren 1 und 2 dargestellt sind.

Fig. 1 zeigt die Gestaltung eines einfachen fehlerkompensierenden pH-Meßgerätes, das über eine mit einem Flüssigkeitsschalter versehenen Meßzelle verfügt.

Fig. 2 zeigt ein automatisches fehlerkompensierendes $Na^+$-Ionkonzentrations-Meßgerät, das mit zwei Flüssigkeitsschaltern versehen ist.

Wie aus Fig. 1 hervorgeht, ist die Meßzelle 1 an eine elektronische signalverarbeitende Einheit 2 angeschlossen. In der Meßzelle 1 ist eine Proben-Lösung 15 mit einem Fühlelement 3 und einer probenseitigen Bezugselektrode 4 in Kontakt. Eine Meßkette 6, die außer den konventionellen Elementen der Meßzelle 1, d. h. der Proben-Lösung 15, der probenseitigen Bezugselektrode 4 und dem Fühlelement 3 noch eine fühlelementseitige Bezugselektrode 5 enthält, steht mit dem Fühlelement 3 über einen inneren Elektrolyt 16 in galvanischer Verbindung. Die Meßzelle 1 enthält außer der Meßkette 6 einen Flüssigkeitsschalter 7, der mit den Flüssigkeitsräumen der probenseitigen und der fühlelementseitigen Bezugselektroden 4, 5 durch die Flüssigkeit galvanisch verbunden ist. Die Meßzelle 1 ist an die elektronische Signalverarbeitungseinheit 2 über die probenseitigen und fühlelementseitigen Bezugselektroden 4 und 5, die die zwei Enden der Meßkette 6 bilden, angeschlossen.

Fig. 2 zeigt eine erfindungsgemäße Meßanordnung komplizierteren Aufbaues, die mit zwei Flüssigkeitsschaltern versehen ist, und die zu einer automatischen Fehlerkompensation bei der $Na^+$-Ionkonzentrationbestimmung geeignet ist.

Wie aus Fig. 2 hervorgeht, ist die Meßzelle 1 an die elektronische Signalverarbeitungseinheit 2 und die Steuereinheit 12 angeschlossen. Die Meßzelle 1 ist in der Meßkette 6 mit der Proben-Lösung 15, mit dem Fühlelement 3 und mit der probenseitigen Bezugselektrode 4 in Kontakt. Ein integrierter Fühler 19 der Meßkette 6 enthält außerdem das schon erwähnte probenseitige Fühlelement 3, sowie ein jeweils mit diesem über den Elektrolyt 18 in galvanischer Verbindung stehendes erstes und zweites standardseitiges Fühlelement. Das erste standardseitige Fühlelement 10 und die erste standardseitige Bezugselektrode 9 sind über die erste Standardlösung 17 miteinander in galvanischer Verbindung. In ähnlicher Weise stehen das zweite standardseitige Fühlelement 11 und die zweite standardseitige Bezugselektrode 20 über die zweite Standardlösung 21 miteinander in galvanischer Verbindung. Die Meßzelle 1 enthält außer der Meßkette 6 den Flüssigkeitsschalter 7, der mit den Flüssigkeitsräumen der probenseitigen Elektrode 4 und der ersten standardseitigen Bezugselektrode 9 über die Flüssigkeit galvanisch verbunden ist. In ähnlicher Weise ist ein zweiter Flüssigkeitsschalter 8 vorgesehen, der an die Flüssigkeitsräume der probenseitigen Elektrode 4 und der zweiten standardseitigen Bezugselektrode 20 über die Flüssigkeit galvanisch angeschlossen ist.

Die Meßzelle 1 ist über die probenseitige Elektrode, die erste standardseitige Elektrode 9 und die zweite standardseitige Bezugselektrode 20 an die elektronische Signalverarbeitungseinheit 2 und über den ersten und zweiten Flüssigkeitsschalter 7 bzw. 8 an die Steuereinheit 12 angeschlossen. Die elektronische Signalverarbeitungseinheit 2 und die Steuereinheit 12 sind über die fehlerkompensierende Einheit 13 an der Rechen- und Anzeigeeinheit 14 angeschlossen.

Das einfache fehlerkompensierende pH-Meßgerät mit dem Flüssigkeitsschalter gemäß Fig. 1 funktioniert in folgender Weise :

Die elektronische Signalverarbeitungseinheit 2 und die Meßzelle 1 — abgesehen von einen Teil des letzteren bildenden Flüssigkeitsschalters 7 — bildet ein konventionelles elektroanalytisches potentiometrisches Meßgerät. Die Wirkungsweise ist dementsprechend : Die Meßgröße, die von den zu bestimmenden Parametern abhängt, ist das an der Grenzoberfläche des Fühlelementes 3 und der Proben-Lösung 5 erscheinende Potential. Die an den übrigen Elementen der Meßkette 6 — die jedoch zur praktischen Ausführung der Messung erforderlich sind — auftretenden Elektrodenpotentiale, d. h. die Elektrodenpotentiale an der probenseitigen Elektrode 4 und an der fühlelementseitigen Bezugselektrode 5 stören jedoch durch ihre Veränderungen die die Meßgröße bildenden nützlichen Informationen nicht. Die aus der Instabilität stammenden Fehler der Referenzpotentiale, die an der probenseitigen Elektrode 4 und der fühlelementseitigen Bezugselektrode 5 erscheinen, werden nämlich in folgender Weise kompensiert : Mit Hilfe des Flüssigkeitsschalters 7 wird die Grenzoberfläche des Fühlelementes 3 zeitweilig kurzgeschlossen, — wodurch diejenigen Potentiale, die an den Grenzoberflächen der Probe 15 des Fühlelementes 3, bzw. an der Grenzoberfläche des inneren Elektrolyts 16 und des Fühlelementes 3 vorhanden sind, aus der Kette herausgenommen werden.

Die probeseitige Bezugselektrode 4 wird in dieser Weise unmittelbar mit der fühlelementseitigen Bezugselektrode 5 in Reihe geschaltet, die resultierende Spannung gemessen, und diese Spannung von dem « konventionell », d. h. ohne Kurzschließung vorgenommenen Meßergebnis, d. h. von der in dieser Weise gewonnenen Spannung abgezogen. Die erhaltene Spannung ist eine Funktion der Konzentration der zu bestimmenden Probelösung, wobei jedoch diese Spannung von der an keiner der an den Bezugselektroden auftretenden Elektrodenpotentialen abhängig ist, wodurch Veränderungen das Meßergebnis nicht stören können.

Der zu bestimmende pK-Wert kann aus den Zellenspannungen bei ein- und ausgeschaltetem Zustand des Flüssigkeitsschalters 7 aufgrund der nachstehenden Formel berechnet werden :

$$pK_x = \frac{(U_x - U'_x) - (U_{STD1} - U'_{STD1})}{S} + pK_{STD}$$

wobei

$pK_x$ = der pK-Wert der zu bestimmenden Proben-Lösung 15 ist

$pK_{STD}$ = der pK-Wert des als innerer Elektrolyt 16 verwendeten Standardlösung ist

$U_x$ = die erhaltene Spannung bei ausgeschaltetem Flüssigkeitsschalter 7, wenn die Meßzelle 1 mit der Proben-Lösung 15 aufgefüllt ist

$U'_x$ = die $U_x$-Spannung, die bei eingeschaltetem Flüssigkeitsschalter 7 meßbar ist

$U_{STD1}$ = die Spannung, die in dem « ersten Anpassungspunkt » des Flüssigkeitsschalters 7 in ausgeschalteten Zustand gemessen worden ist, wenn die Meßzelle 1 mit der ersten Standardlösung aufgefüllt war. Es ist zweckmäßig, bei der Anpassung als Standardlösung eine solche Lösung zu verwenden, deren Zusammensetzung mit dem inneren Elektrolyt 16 identisch ist

$U'_{STD1}$ = ist die $U_{STD1}$-Spannung, die bei eingeschaltetem Flüssigkeitsschalter 7 meßbar ist

$S$ = der numerische Wert der Ansprechfunktion-Steilheit (« slope »), der für die Empfindlichkeit des Fühlelementes 3 charakteristisch ist. Dieser Wert wird bei der Anpassung in dem zweiten Anpassungspunkt durch das konventionelle Verfahren bestimmt.

Es ist ersichtlich, daß in dieser Formel die Potentiale der Bezugselektroden 4 und 5 nicht auftreten ; diese entfallen im Laufe der Berechnung. Die erforderliche Häufigkeit der Anpassung wird ausschließlich durch die Stabilität der für das Fühlelement 3 charakteristischen zwei Parameter — $U_{STD1}$ und S — bestimmt.

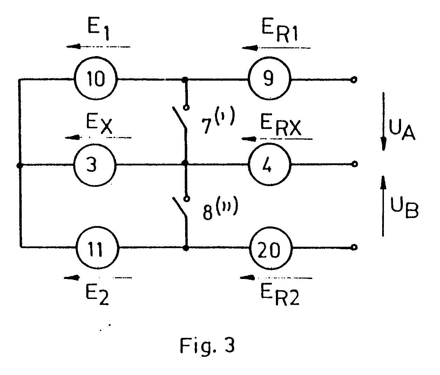

Fig. 3 zeigt das vereinfachte Ersatzschaltbild der Meßzelle 1 eines automatischen fehlerkompensierenden, die $Na^+$-Ionkonzentration messenden Gerätes gemäß Fig. 2, das mit zwei Flüssigkeitsschaltern ausgestattet und etwas komplizierter ist, als das Gerät gemäß Fig. 1.

In diesem Ausführungsbeispiel ist in der Meßzelle 1 des Meßgerätes die Meßkette 6 mit Blei-Elektroden gestaltet. Diese sind die probenseitige Elektrode 4, die erste standardseitige Elektrode 9 und die zweite standardseitige Bezugselektrode 20. Die Meßkette 6 enthält außer den erwähnten Bezugselektroden auch einen sogenannten integrierten Fühler 19. Für den letztgenannten ist charakteristisch, daß — falls das probenseitige Fühlelement 3, das erste standardseitige Fühlelement 10 und das zweite standardseitige Fühlelement 11 in chemischer und mechanischer Hinsicht beinahe gleich sind (d. h., daß die an diesem erscheinenden Standardpotential, bzw. die Ansprechfunktion-Steilheit (« slope »), die für die Empfindlichkeit charakteristisch ist, d. h. daß ihre Änderungen im Laufe der Messung mit einer guten Annäherung beinahe gleich sind) und falls einzeln die Spannung zwischen der probenseitigen Bezugselektrode 4 und der standardseitigen Elektroden 9 und 10 gemessen wird, — aus diesen zwei Spannungen die Konzentration der Probe, oder deren pNa-Wert bestimmt werden kann, — Der in dieser Weise erhaltene Wert ist praktisch unabhängig von den Standardpotentialen zwischen den Fühlelementen 3, 10 und 11 und von der Ansprechfunktion-Steilheit und auch von den Meßfehlern, die aus deren Änderungen stammen. Der berechnete Wert hängt aber noch von den Referenzpotentialen gemessen an den Bezugselektroden 4, 9 und 20, und auch von ihrer Instabilitäten ab. Die dadurch entstandenen Meßfehler können durch Anwendung des ersten und zweiten Flüssigkeitsschalters 7 und 8 eliminiert werden. Der erste Flüssigkeitsschalter 7 schließt in seinem geschlossenen Zustand die beiden Grenzflächen der probenseitigen und der standardseitigen Fühlelemente 3 und 10 kurz, und ermöglicht eine unmittelbare Messung der resultierenden Elektrodenpotentiale, die an den probenseitigen und der standardseitigen Bezugselektroden 4 und 9 erscheinen. Ähnlich zu diesem schließt der zweite Flüssigkeitsschalter 8 im eingeschalteten Zustand die Grenzflächen der probenseitigen und der zweiten standardseitigen Fühlelemente 3 und 11 kurz, wodurch die unmittelbare Messung derjenigen Elektrodenpotentiale, die an der probenseitigen und der zweiten standardseitigen Bezugselektroden 4 und 20 auftreten, möglich ist. Die elektronische Signalverarbeitungseinheit 2 mißt kontinuierlich die zwei Spannungen $U_A$ und $U_B$, die in bezug zu die probenseitige Bezugselektrode 4 an den standardseitigen Bezugselektroden 9 und 20 auftreten. Die Steuereinheit 12 schließt in vorbestimmten Zeitintervallen, z. B. am Ende jeder Messung, alternierend den ersten Flüssigkeitsschalter 7 und danach den zweiten Flüssigkeitsschalter 8 kurz. Die Fehlerkompensationseinheit 13 bildet je Paar im eingeschalteten und ausgeschalteten Zustand der Flüssigkeitsschalter 7 und 8 die Spannungsdifferenzen, die durch die elektronische Signalverarbeitungseinheit gemessen werden.

Die Rechen- und Anzeigeeinheit 14 berechnet aus dem mit Fehlerkompensation ermittelten « Differenzsignalen » einen Wert und signalisiert den Wert der zu bestimmenden $Na^+$-Ionkonzentration aufgrund der nachstehenden Formel :

$$c_x = \exp_{10} \frac{\lg c_1((U_{Bx} - U''_{Bx}) - (U_{B2} - U''_{B2})) - \lg c_2((U_{Ax} - U'_{Ax}) - (U_{Al} - U'_{Al}))}{((U_{Bx} - U''_{Bx}) - (U_{B2} - U''_{B2})) - ((U_{Ax} - U'_{Ax}) - (U_{Al} - U'_{Al}))}$$

wobei

$c_x$ = die zu bestimmende $Na^+$-Konzentration der Probe 15,

$c_1$ = die $Na^+$-Ionkonzentration der ersten Standardlösung 17,

$c_2$ = die $Na^+$-Ionkonzentration der zweiten Standardlösung 21,

$U_{Ax}$ = die Spannung zwischen der ersten standardseitigen und der probenseitigen Bezugselektrode 9 und 4, falls das Fühlelement 3 mit der Proben-Lösung 15 aufgefüllt ist, und sowohl der erste als auch der zweite Flüssigkeitsschalter 7 und 8 ausgeschaltet sind

$U'_{Ax}$ = die $U_{Ax}$ Spannung bei eingeschaltetem Flüssigkeitsschalter 7,

$U_{Al}$ = die Spannung zwischen der ersten standardseitigen und der probenseitigen Bezugselektrode 9 und 4, bei der Anpassung, als das Fühlelement 3 mit der ersten Standardlösung 17 aufgefüllt war und die Flüssigkeitsschalter 7 und 8 ausgeschaltet waren (der erste Anpassungspunkt)

$U'_{Al}$ = die Spannung $U_{Al}$ bei eingeschaltetem erstem Flüssigkeitsschalter 7,

$U_{Bx}$ = die Spannung zwischen der zweiten standardseitigen und der probenseitigen Bezugselektrode 20 und 4, wenn das Fühlelement 3 mit der Probe 15 aufgefüllt ist, und die Flüssigkeitsschalter 7 und 8 ausgeschaltet sind,

$U''_{Bx}$ = die $U_{Bx}$ Spannung bei eingeschaltetem zweitem Flüssigkeitsschalter 8,

$U_{B2}$ = die Spannung zwischen der zweiten standardseitigen und der probenseitigen Bezugselektrode 20 und 4 bei der Anpassung, als das Fühlelement 3 mit der zweiten Standardlösung 21 aufgeladen war und die Flüssigkeitsschalter 7 und 8 ausgeschaltet waren (zweiter Anpassungspunkt), und

$U''_{B2}$ = die $U_{B2}$ Spannung bei eingeschaltetem zweitem Flüssigkeitsschalter 8 ist.

## Patentansprüche

1. Elektroanalytisches Meßverfahren zur Bestimmung der Ionenaktivität von Probenlösungen mittels einer Meßkette (6), die mindestens ein Fühlelement (3, 10, 11), das mit einer Seite mit der Probenlösung (15) in Berührung steht, und mindestens zwei Bezugselektroden (4, 5, 9, 20) aufweist, von denen die eine (5, 9) über eine Elektrolytlösung (16, 17) mit der anderen Seite des mindestens einen Fühlelements (3, 10, 11) und die andere Bezugselektrode (4) über eine Elektrolytlösung (17, 21) mit der Probenlösung (15) galvanisch verbunden wird, und mittels einer elektronischen signalverarbeitenden Einheit (2), wobei durch eine Steuereinheit (12) mindestens ein Flüssigkeitsschalter (7, 8), der einen Elektrolyt mit hoher Leitfähigkeit aufweist, betätigt wird und die mindestens zwei Bezugselektroden (4, 5, 9, 20) zeitweilig galvanisch kurzgeschlossen werden, wodurch auch die beiden Seiten des mindestens einen Fühlelements (3, 10, 11) zeitweilig galvanisch kurzgeschlossen werden, wobei von den Bezugselektroden (4, 5) ein erster Meßwert bei geschlossenem und anschließend bei geöffnetem mindestens einen Flüssigkeitsschalter (7, 8) ein zweiter Meßwert der elektronischen signalverarbeitenden Einheit (2) zugeführt werden, und wobei aus beiden Meßwerten eine fehlerkompensierte Meßgröße erzeugt wird.

2. Elektroanalytisches Meßverfahren nach Anspruch 1, dadurch gekennzeichnet, daß bei mehreren Flüssigkeitsschaltern Elektrolyte mit unterschiedlichen Konzentrationen vorgesehen sind.

3. Elektroanalytisches Meßgerät zur Durchführung des Verfahrens nach Anspruch 1 zur Bestimmung der Ionenaktivität von Probenlösungen (15) mit einer Meßzelle (1) und einer an diese angeschlossenen elektronischen signalverarbeitenden Einheit (2), mit einer Meßkette (6), die mindestens ein Fühlelement (3, 10, 11), das mit einer Seite mit der Probenlösung (15) in Berührung steht, und mindestens zwei Bezugselektroden (4, 5, 9, 20) aufweist, von denen die eine Bezugselektrode (5, 9) über eine Elektrolytlösung (16, 17) mit der anderen Seite des mindestens einen Fühlelements (3, 10, 11) und die andere Bezugselektrode (4, 20) über eine Elektrolytlösung (17, 21) mit der Probenlösung (15) verbunden ist, mit einer elektronischen signalverarbeitenden Einheit (2), die mit den Bezugselektroden (4, 5, 9, 20) verbunden ist, und mit einer Steuereinheit (12) zur Steuerung mindestens eines Flüssigkeitsschalters (7, 8), der einen Elektrolyten mit hoher Leitfähigkeit aufweist, wobei der mindestens eine Flüssigkeitsschalter (7, 8) durch die Steuereinheit zeitweilig schließbar ist, um die mindestens zwei Bezugselektroden (4, 5, 9, 20) zeitweilig galvanisch kurzzuschließen, wodurch auch die beiden Seiten des mindestens einen Fühlelements (3, 10, 11), zeitweilig galvanisch kurzgeschlossen werden.

4. Elektroanalytisches Meßgerät nach Anspruch 3, dadurch gekennzeichnet, daß bei Vorhandensein mehrerer Flüssigkeitsschalter (7, 8) die Steuereinheit (12) diese in vorbestimmten Zeitintervallen alternierend schließt.

5. Elektroanalytisches Meßgerät nach Anspruch 3 oder 4, dadurch gekennzeichnet, daß die Meßzelle (1) einen integrierten Fühler (19) enthält, der ein probenlösungsseitiges Fühlelement (3) und zwei standardseitige Fühlelemente (10, 11) aufweist.

6. Elektroanalytisches Meßgerät nach einem der vorhergehenden Ansprüche 3 bis 5, dadurch gekennzeichnet, daß von den Elektrolytlösungen (17, 21) wenigstens eine Lösung kontinuierlich oder zeitweilig strömt.

7. Elektroanalytisches Meßgerät nach einem der Ansprüche 3 bis 6, dadurch gekennzeichnet, daß die Steuereinheit (12) die beiden Seiten des mindestens einen Fühlelements (3, 10, 11) der Meßzelle (6) zeitweise nach einem vorgegebenen Programm galvanisch kurzschließt.

8. Elektroanalytisches Meßgerät nach Anspruch 7, dadurch gekennzeichnet, daß eine fehlerkompensierende Einheit (13) an die elektronische Signalverarbeitungseinheit (2) und an die Steuereinheit (12) angeschlossen ist, die auf der Grundlage der aus den kurzgeschlossenen oder nicht kurzgeschlossenen Meßkettenteilen erhaltenen Meßgrößen das zumindest eine fehlerkompensierende Signal nach einem vorgegebenen Programm erzeugt.

9. Elektroanalytisches Meßgerät nach Anspruch 8, dadurch gekennzeichnet, daß an den Ausgang der fehlerkompensierenden Einheit (13) eine Rechen- und Anzeigeeinheit (14) angeschlossen ist, die den numerischen Wert des zu messenden Parameters durch das mindestens eine fehlerkompensierende Signal berechnet.

**Claims**

1. Electroanalytical measuring process for determining the ion activity of specimen solutions by means of a measuring chain (6) comprising at least one sensing element (3, 10, 11) which is in contact with one side of the specimen solution (15) and which comprises at least two reference electrodes (4, 5, 9, 20), of which one (5, 9) is galvanically connected via an electrolyte solution (16, 17) to the other side of the at least one sensing element (3, 10, 11) while the other reference electrode (4) is galvanically connected to the specimen solution (15) via an electrolyte solution (17, 21), and which is actuated by means of an electronic signal processing unit (2), a control unit (12) comprising at least one fluid switch (7, 8) comprising an electrolyte of high conductivity, the at least two reference electrodes (4, 5, 9, 20) being temporarily galvanically short-circuited, so that also the two sides of the at least one sensing element (3, 10, 11) are temporarily galvanically short-circuited, a first measured value being fed from the reference electrodes (4, 5) to the electronic signal processing unit (2) while the at least one fluid switch (7, 8) is closed, after which a second measured value is fed from the reference electrodes (4, 5) to the electronic signal processing unit (2) while the at least one fluid switch (7, 8) is open, an error compensated measured quantity being produced frofm the two measured values.

2. Electroanalytical measuring process according to Claim 1, characterised in that where there are a plurality of fluid switches, electrolytes of different concentrations are provided.

3. Electroanalytical measuring apparatus for carrying out the process according to Claim 1 for determining the ion activity of specimen solutions (15), with a measuring cell (1) and connected to this latter an electronic signal processing unit (2) comprising a measuring chain (6) which has at least one sensing element (3, 10, 11) while the other reference electrode (4, 20) is connected to the specimen solution (15) via an electrolyte solution (17, 21), and comprising an electronic signal processing unit (2) which is connected to the reference electrodes (4, 5, 9, 20) and comprising a control unit (12) for controlling at least one fluid switch (7, 8) which contains an electrolyte of high conductivity, the at least one fluid switch (7, 8) being adapted to be temporarily closed by the control unit so that the at least two reference electrodes (4, 5, 9, 20) are temporarily and galvanically short-circuited, so that also both sides of the at least one sensing element (3, 10, 11) is temporarily and galvanically short-circuited.

4. Electroanalytical measuring apparatus according to Claim 3, characterised in that in the presence of a plurality of fluid switches (7, 8), the control unit (12) alternately closes them at predetermined intervals of time.

5. Electroanalytical measuring apparatus according to Claim 3 or 4, characterised in that the measuring cell (1) contains an integrated sensor (19) containing a sensing element (3) on the same side as the specimen solution and two sensing elements (10, 11) on the same side as the standard solution.

6. Electroanalytical measuring apparatus according to one of the preceding Claims 3 to 5, characterised in that from the electrolyte solutions (17, 21), at least one solution flows continuously or intermittently.

7. Electroanalytical measuring apparatus according to one of Claims 3 to 6, characterised in that the control unit (12) intermittently and in accordance with a predetermined programme, galvanically short-circuits the two sides of the at least one sensing element (3, 10, 11) of the measuring cell (6).

8. Electroanalytical measuring apparatus according to Claim 2, characterised in that an error compensating unit (13) is connected to the electronic signal processing unit (2) and to the control unit (12) which, on a basis of the measured values obtained from the short-circuited or non-short-circuited

**0 062 250**

parts of the measuring chain generates the at least one error compensating signal in accordance with a predetermined programme.

9. Electroanalytical measuring apparatus according to Claim 8, characterised in that there is connected to the output of the error compensating unit (13) a computing and display unit (14) which, by means of the at least one error compensating signal, computes the numerical value of the parameter which is to be measured.

## Revendications

1. Procédé d'analyse électrochimique pour la détermination de l'activité ionique de solutions-échantillons à l'aide d'une chaîne de mesure (6), qui comporte au moins un élément sensible (3, 10, 11), qui est en contact d'un côté avec la solution-échantillon (15), et au moins deux électrodes de référence (4, 5, 9, 20), dont l'une (5, 9) est reliée galvaniquement par l'intermédiaire d'une solution d'électrolyte (16, 17) avec l'autre côté de l'élément sensible (3, 10, 11) au moins prévu tandis que l'autre électrode de référence (4) est reliée galvaniquement par l'intermédiaire d'une solution d'électrolyte (17, 21) avec la solution-échantillon (15), et à l'aide d'une unité électronique de traitement de signaux (2), procédé selon lequel, au moyen d'une unité de commande (12), au moins un interrupteur à liquide (7, 8), qui comporte un électrolyte de haute conductivité, est actionné et les deux électrodes de référence (4, 5, 9, 20) au moins prévues sont court-circuitées galvaniquement temporairement, de sorte qu'également les deux côtés de l'élément sensible (3, 10, 11) au moins prévu sont court-circuités galvaniquement temporairement, afin que les électrodes de référence (4, 5) fournissent à l'unité électronique de traitement de signaux (2) une première valeur de mesure quand l'interrupteur à liquide (7, 8) est fermé, et ensuite, quand il est ouvert, une seconde valeur de mesure, et où une grandeur de mesure est produite, avec compensation d'erreur, à partir des deux valeurs de mesure.

2. Procédé d'analyse électrochimique selon la revendication 1, caractérisé en ce qu'il est prévu, pour plusieurs interrupteurs à liquides, un électrolyte avec des concentrations différentes.

3. Appareil d'analyse électrochimique pour la mise en œuvre du procédé selon la revendication 1 pour la détermination de l'activité ionique de solutions-échantillons (15), comportant une cellule de mesure (1) et une unité électronique de traitement de signaux (2) raccordée à celle-ci, une chaîne de mesure (6), qui comporte au moins un élément sensible (3, 10, 11), qui est en contact d'un côté avec la solution-échantillon (15), et au moins deux électrodes de référence (4, 5, 9, 20), dont l'une (5, 9) est reliée par l'intermédiaire d'une solution d'électrolyte (16, 17) avec l'autre côté de l'élément sensible (3, 10, 11) au moins prévu tandis que l'autre électrode de référence (4, 20) est reliée par l'intermédiaire d'une solution d'électrolyte (17, 21) avec la solution échantillon (15), une unité électronique de traitement de signaux (2) qui est reliée aux électrodes de référence (4, 5, 9, 20) et une unité de commande (12) pour la commande d'au moins un interrupteur à liquide (7, 8), qui comporte un électrolyte de haute conductivité, cet interrupteur à liquide (7, 8) au moins prévu pouvant être fermé temporairement par l'unité de commande pour court-circuiter galvaniquement temporairement les deux électrodes de références (4, 5, 9, 20) au moins prévues, de telle sorte qu'également les deux côtés de l'élément sensible (3, 10, 11) au moins prévu sont court-circuités galvaniquement temporairement.

4. Appareil d'analyse électrochimique selon la revendication 3, caractérisé en ce que, lors de l'existence de plusieurs interrupteurs à liquides (7, 8), l'unité de commande (12) les ferme alternativement dans des intervalles de temps déterminés.

5. Appareil d'analyse électrochimique selon la revendication 3 ou 4, caractérisé en ce que la cellule de mesure (1) contient un capteur intégré (19), qui comporte un élément sensible (3) du côté de la solution-échantillon et deux éléments sensibles (10, 11) du côté standard.

6. Appareil d'analyse électrochimique selon une des revendications précédentes 3 à 5, caractérisé en ce que, parmi les solutions d'électrolyte (17, 21), au moins une solution s'écoule de façon continue ou temporaire.

7. Appareil d'analyse électrochimique selon une des revendications 3 à 6, caractérisé en ce que l'unité de commande (12) court-circuite galvaniquement les deux côtés de l'élément sensible (3, 10, 11) au moins prévu de la cellule de mesure (6), temporairement selon un programme prédéterminé.

8. Appareil d'analyse électrochimique selon la revendication 7, caractérisé en ce qu'une unité de compensation d'erreur (13) est reliée à l'unité électronique de traitement de signaux (2) et à l'unité de commande (12) et elle produit, en relation avec les grandeurs de mesure obtenues en provenance des parties de la chaîne de mesure, qui sont court-circuitées ou non court-circuitées, au moins un signal de compensation d'erreur selon un programme prédéterminé.

9. Appareil d'analyse électrochimique selon la revendication 8, caractérisé en ce qu'à la sortie de l'unité de compensation d'erreur (13) est reliée à une unité de calcul et d'affichage (14) qui calcule la valeur numérique du paramètre à mesurer en prenant en compte le signal de compensation d'erreur.

Fig. 1

0 062 250

Fig. 2

Fig. 3

0 062 250